# EUROPEAN PATENT APPLICATION

(11) **EP 4 797 632 A1**
(43) Date of publication of application: **26.08.2026**
(21) Application number: 25225755.5
(22) Date of filing: 19.12.2025
(51) Int. Cl.: H04L 25/03, G06N 3/045, H04L 45/02

(54) **ARTIFICIAL INTELLIGENCE (AI) AND MACHINE LEARNING (ML)-BASED MODEL SWITCHING TECHNIQUES FOR NEURAL NETWORK (NN)-BASED RECEIVERS**

(30) Priority: 21.02.2025 US 202519059819
(71) Applicant: Viavi Solutions Inc., Chandler, AZ 85286 (US)
(72) Inventor: DIZDAR, Onur, London, W4 3DF (GB); GUPTA, Ankit, Welwyn Garden City, AL7 3EQ (GB); LEUNG, Chi-Ming, Cambridge, CB23 7XL (GB); KADAN, Fehmi Emre, London, NW9 4GD (GB); HASHEMI, Seyedataollah Sattarzadeh, Guildford, GU1 3NA (GB); CHEN, Yun, Stevenage, SG2 9AG (GB); WANG, Stephen, Stevenage, SG1 2AN (GB)
(74) Representative: Murgitroyd & Company

(57) **Abstract**

Systems, methods, and devices are provided for implementing artificial intelligence (AI) and machine learning (ML)-based model switching techniques for neural network (NN)-based receivers. In one aspect, a system may deploy a plurality of neural network receivers associated with a receiver and trained to operate in different environments, receive sensing data associated with the receiver, and predict, based on the received sensing data, an environment for the receiver from a predetermined set of different environment types. The system may also select a neural network receiver of the plurality of neural network receivers based on a probability of a successful decoding and switch to the selected neural network receiver.

## Description

### TECHNICAL FIELD

This disclosure is generally directed to implementation of artificial intelligence (AI) and machine learning in telecommunication systems, and more specifically directed to implementing artificial intelligence (AI) and machine learning (ML)-based model switching techniques for neural network (NN)-based receivers.

### BACKGROUND

Artificial Intelligence (AI) and Machine Learning (ML) techniques are being increasingly adopted by a wide variety of industries. This includes the telecommunications industry, where the adoption of AI/ML may usher in a new era of improved system performance, higher efficiency, enhanced end user experience, etc. For example, existing Working Groups (WGs) within the 3^{rd} Generation Partnership Project (3GPP) are increasingly turning to applying AI/ML to many aspects in present and presently developing mobile network systems (e.g., 5G, 5GNR, 5G-Advanced, etc.), as well as future mobile network systems (e.g., 6G et seq.).

Regarding the radio air interface between a User Equipment (UE) and a network Base Station (BS), which may be, e.g., a Next Generation Node B (gNB or gNodeB), in a mobile telecommunication system, there may be many specific AI/ML use cases. Examples include Channel State Information (CSI) enhancement, beam management, model switching, positioning accuracy enhancements, Radio Resource Management (RRM) measurement prediction, measurement event prediction, and Radio Link Failure (RLF) prediction. Indeed, generally speaking, any systems, apparatuses, and/or methods which may apply specific AI/ML techniques and/or methodologies to management and operations of the air interface components of a telecommunications system may be beneficial.

### SUMMARY

The invention is defined in the claims.

### BRIEF DESCRIPTION OF DRAWINGS

Features of the present disclosure are illustrated by way of example and not limited in the following figure(s), in which like numerals indicate like elements, in which:
FIG. 1 is a block diagram illustrating a conventional mobile telecommunications transmitter/receiver system, according to examples of the present disclosure.
FIGS. 2A-2C are block diagrams illustrating neural network (NN) receivers and, in some cases, neural net transmitters in various configurations, according to examples of the present disclosure.
FIG. 3 illustrates a diagram of an implementation structure for a neural net implementing artificial intelligence (AI) and machine learning (ML), according to examples of the present disclosure.
FIG. 4 illustrates a block diagram of signal processing-based telecommunications system, according to examples of the present disclosure.
FIGS. 5-6 illustrate block diagrams of NN-based transceivers, according to examples of the present disclosure.
FIG. 7 illustrates an example of a call flow of providing UE capability in Al-based NN receivers, according to examples of the present disclosure.
FIG. 8 illustrates a model switching framework for selection among a plurality of NN-based receivers, according to examples of the present disclosure.
FIG. 9 illustrates a multi-phase implementation for environmental class selection and model switching, according to examples of the present disclosure.
FIG. 10 illustrates a block diagram of a system environment, including a system, that may be implemented to use artificial intelligence (AI) and machine learning (ML)-based switching techniques for neural network (NN)-based receivers in telecommunications systems, according to examples of the present disclosure.
FIG. 11 illustrates a method for utilizing artificial intelligence (AI) and machine learning (ML)-based switching techniques for neural network (NN)-based receivers, according to examples of the present disclosure.

### DETAILED DESCRIPTION

For simplicity and illustrative purposes, the present disclosure is described by referring mainly to examples and embodiments thereof. In the following description, numerous specific details are set forth in order to provide a thorough understanding of the present disclosure. It will be readily apparent, however, that the present disclosure may be practiced without limitation to these specific details. In other instances, some methods and structures readily understood by one of ordinary skill in the art have not been described in detail so as not to unnecessarily obscure the present disclosure. As used herein, the terms "a" and "an" are intended to denote at least one of a particular element, the term "includes" means includes but not limited to, the term "including" means including but not limited to, and the term "based on" means based at least in part on.

As used herein, the terms "Al," "ML," "Artificial Intelligence," and/or "Machine Learning," and/or "Al/ML" may refer generally to methodologies, techniques, and/or technology that creates one or models by learning/training using a large dataset of input such that the one or more models may be used to infer/produce results/output based on new and/or real-time input (and the term "AI/ML" will be treated as a singular noun herein).

While AI/ML is being discussed generally for use in telecommunications systems/networks, specific deployments/implementations have yet to be standardized and/or adopted, including, for example, AI/ML implementations for the air interface components in a mobile telecommunications system, such as, for example, those defined by the 3GPP standards. Recently, the 3GPP standardized the New Radio (NR) release to enable deployment of 5G (and eventually, 6G) worldwide.

Recent advances in artificial intelligence (AI) offer opportunities to reach efficiency and throughput capabilities for wireless communications that may have previously been unattainable. Accordingly, since 2022, the third Generation Partnership Project (3GPP) has begun standardizing use of Al in wireless communications.

In some instances, Al techniques may be utilized to implement a NN receiver. As used herein, a "NN receiver" or "neural network (NN) receiver" may include, one or more trained Al and machine learning (ML) models that may replace multiple signal processing blocks for a physical layer of a receiver in a wireless communications system. The NN receiver may be configured to perform one or more functionalities of the wireless communications system typically associated with a receiver including but not limited to channel estimation (CE) and interpolation, channel equalization (CEQ), and signal de-mapping (SD).

In some instances, in order to provide performance gains, implementation of Al techniques may include altogether replacing individual, receiver-side signal processing blocks with NNs. This may come with various benefits. Specifically, a (trained) NN receiver may address channel and hardware impairments in a telecommunication network associated with implementation of signal processing blocks, thereby leading to significant performance gains when compared to (typical) 5G-NR receiver processing.

Implementation of Al and ML in telecommunications networks (e.g., 6G networks) may hinge on their ability to provide reliable performance gains under varying conditions. Examples of such conditions include, but are not limited to, device and network configurations, operational environments, operational scenarios, and site-specific characteristics and conditions.

To address these issues, a number of approaches may be implemented, including model generalization, model updating, and model switching.

"Model generalization" may refer to implementation of an Al model that may be adaptable to varying scenarios. For example, a NN receiver implemented via Al techniques may be required to address a number of varying operational aspects. Examples include varying channel conditions, Doppler spread(s), delay spread(s), and signal-to-noise ratios (SNR). It may be appreciated that for an Al model to be generalize-able to varying conditions, this may require training on one or more (often very large) dataset(s) that may be associated with these varying conditions. It may further be appreciated that creation of these datasets may be costly and time-consuming, as it may require substantial efforts in data collection and data labelling, along with various pre-processing and processing of the (collected) data.

"Model updating" may refer to fine-tuning of parameters of an Al model for varying use cases. Model updating may be implemented by various methods, such as transfer learning, meta-learning, and federated learning.

"Model switching" may refer to creation of a "set" of Al models, each of which may cater to a "specific" scenario and/or purpose (e.g., a site, a network configuration, etc.). Switching between these models, as may be beneficial and/or efficient, may enable implementation of smaller (i.e., more efficient) NNs directed to these specific use cases. Approaches such as these, and others, have primarily focused on improving telecommunication network efficiencies for three aspects: beam management, user equipment (UE) positioning, and channel state information (CSI) feedback.

Systems and methods described herein may be directed to, among other things, selection of a NN receiver from a plurality of NN receivers, each of which may be trained to operate in one or more environments. In particular, the systems and methods may enable selection of a NN receiver that may be trained (e.g., optimally) for a particular environment from a group of NN-based receivers trained for different environments. In some examples, the one or more environments may be associated with one or more different telecommunications systems.

In some examples, and as will be discussed further below, systems and methods described herein may be configured to output, among other things, a selection associated with a particular environment from a predetermined set of different environment types. By selecting a (e.g., best-suited) NN receiver from a plurality of NN-based receivers in the manner(s) described, the selected NN receiver may be able to operate more efficiently than an alternate NN that may, for example, be configured to operate adaptably in multiple environments. It may be appreciated that the systems and methods described herein may be directed to, among other things, neural receivers designed using artificial neural networks and neuromorphic receivers designed using spiking neural networks and may be trained for transmissions with or without pilots.

In some examples, and as will be discussed further below, the systems and methods may implement one or more NNs utilizing various information (e.g., data) associated with a telecommunications network. In some examples, and as discussed further below, this data may originate from sensors (also referred to as "sensing data") of one or more devices associated with a telecommunications network. An example of this information may include location data associated with the telecommunications network (e.g., global positioning system (GPS) data).

In some examples, to enable selection of a NN receiver from a plurality of NN-based receivers, the systems and methods may implement various types of NN training (or learning). For example, in some instances, the NN receivers may be trained on receiver-side (only). Typically, training on receiver-side may be directed to, among other things, replacing channel estimation, interpolation, equalization, and signal de-mapping blocks. In other examples, the NN receivers may be trained end-to-end. Typically, training on end-to-end may be directed to joint training of NN blocks at receiver-side and transmitter-side, in order to achieve better performance than that which would result from training of only one side. In addition to replacing signal processing blocks, end-to-end training may also enable replacement of signal mapping blocks at transmitter-side, thereby enabling "pilotless" transmission.

Systems and methods described herein may be directed to, among other things, acquiring a UE capability for performing decoding via use of NN receivers. In some examples, the decoding may be implemented via modified radio resource control (RRC) signaling. In other examples, the decoding may be implemented via modified downlink control information (DCI) format(s). As discussed in further detail below, the systems and methods may include NN receivers implemented via artificial NNs, and may include neuromorphic receivers implemented via spiking NNs. In some examples, and as discussed further below, the NN receivers and neuromorphic receivers may be trained for transmissions with or without pilots.

In some examples, the systems and methods described herein may implement a NN-based switching module (or "switching module") to choose from a set of NN-based receivers (e.g., based on receiver environment).

In some examples, the selection may be based on the received signal or reflected integrated sensing and communications (ISAC) signal. In some examples, and as will be discussed further below, input of the module may be a received orthogonal frequency division multiplexing (OFDM) signal in frequency domain or a reflected OFDM signal in frequency domain.

In some examples, selection from a set of NN-based receivers may be based on information (i.e., input) received from sensors on a telecommunications network (e.g., receiver-side). In some examples, input(s) for a switching module may include one or more information types received from one or more sensors operating in association with a receiver. As discussed further below, this information may include, among other things, audio samples (e.g., from microphones), image samples (e.g., from cameras), accelerometer data, gyroscope data, and location data (e.g., GPS data). In some examples, outputs of a switching module may include prediction of an (e.g., optimal or appropriate) receiver environment (or environment type) from a set of predetermined receiver environments (or environment types).

It may be appreciated that systems and methods described herein may be directed to one or more communications systems including one or more transmitter having one or more antennas to communicate via a communications channel to one or more receivers having one or more antennas. Examples of these communications channels may include Single Input Single Output (SISO), Single Input Multiple output (SIMO), Multiple Input Single Output (MISO), or Multiple Input multiple Output (MIMO) types.

In some examples, the systems and methods described herein may include a method to select a neural network receiver for a communications network, comprising deploying a plurality of neural network receivers associated with a receiver component of the communications network, wherein the plurality of neural network receivers are trained to operate in different receiver-side environments, receiving sensing data associated with the receiver component, predicting, based on the received sensing data, an environment for the receiver component from a predetermined set of different environment types. In addition, the method may include selecting the neural network receiver from the plurality of neural network receivers based on a probability of a successful decoding, wherein the selected neural network receiver is trained for the predicted environment and switching to the selected neural network receiver to perform one or more operations of the receiver component. In some examples, the one or more operations include channel estimation and interpolation, channel equalization, and signal de-mapping functionalities associated with the communications network, and the method may further comprise obtaining a model identifier (ID) for the selected neural network receiver. In some examples, the switching to the selected neural network receiver is based on a switching criteria, the switching criteria including one or more of after a predetermined time period, after a predetermined number of transmissions are received, and after a predetermined number of packet decoding errors occur, the received sensing data includes data from one or more receiver-side sensors and location data associated with the receiver component, and the data from one or more receiver-side sensors includes at least one of audio samples, image samples, accelerometer data, and gyroscope data. Furthermore, in some examples, the received sensing data further includes data associated with a signal received by the receiver component, and the signal received by the receiver component is a frequency domain complex baseband OFDM signal.

In some examples, the systems and methods described herein may include a system, comprising at least one processor with a non-transitory computer-readable memory storing instructions executable by the at least one processor to deploy a plurality of neural network receivers associated with a receiver component of a communications network, wherein the plurality of neural network receivers are trained to operate in different receiver-side environments, receive sensing data associated with the receiver component, predict, based on the received sensing data, an environment for the receiver component from a predetermined set of different environment types, select a neural network receiver from the plurality of neural network receivers based on a probability of a successful decoding, wherein the selected neural network receiver is trained for the predicted environment; and switch to the selected neural network receiver to perform one or more operations of the receiver component. In some examples, the one or more operations include channel estimation and interpolation, channel equalization, and signal de-mapping functionalities associated with the communications network, the switching to the selected neural network receiver is based on a switching criteria, the switching criteria including one or more of after a predetermined time period, after a predetermined number of transmissions are received, and after a predetermined number of packet decoding errors occur, and the receiver component is deployed on user equipment (UE) side. In some examples, the receiver component is deployed on network side. In some examples, the predicting the environment for the receiver component includes implementing a convolutional neural network (CNN) and input dimensions of the CNN are equal to an OFDM resource grid, and output dimensions of the CNN are equal to a number of predetermined environmental types.

In some examples, the systems and methods described herein may include a method to select a neural network receiver for a communications network, comprising deploying a plurality of neural network receivers associated with a receiver component of the communications network, wherein the plurality of neural network receivers are trained to operate in different receiver-side environments, predicting, based on received sensing data, an environment for the receiver component from a predetermined set of different environment types, and selecting the neural network receiver from the plurality of neural network receivers based on a probability of a successful decoding, wherein the selected neural network receiver is trained for the predicted environment.

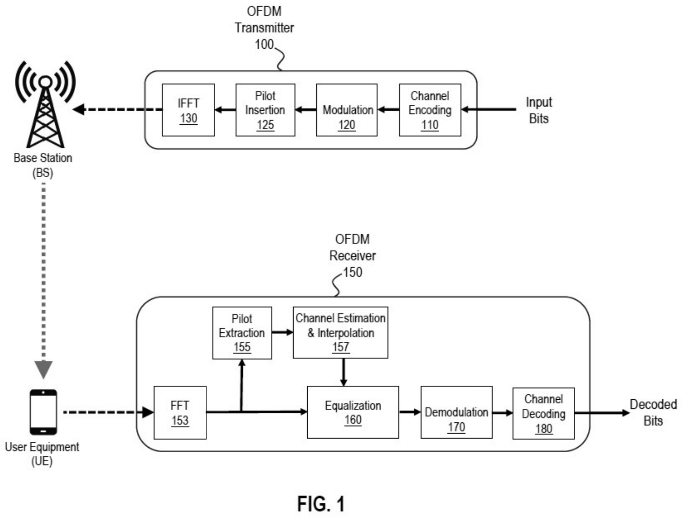

FIG. 1 is a block diagram illustrating a conventional mobile telecommunications transmitter/receiver system, according to examples of the present disclosure. FIG. 1 specifically illustrates a Multiple Input Multiple Output (MIMO) Orthogonal Frequency Division Multiplexing (OFDM) system including both an OFDM transmitter 100, which may be, e.g., a network base station (BS), and an OFDM receiver 150, which may be user equipment (UE), such as, e.g., a cell phone. The OFDM transmitter 100 and OFDM receiver 150 in FIG. 1 may be part of a 3GPP system.

FIG. 1 is provided to illustrate the explanation below, and may omit aspects, features, and/or components not germane to examples of the present disclosure, as would be understood by one of ordinary skill in the art. For example, many more functional blocks may be used in the process of transmitting and receiving OFDM symbols than shown in FIG. 1, as would be understood by one of ordinary skill in the art. Moreover, examples of the present disclosure are in no way limited by FIG. 1, as examples of the present disclosure may apply to apply to non-OFDM systems, as well as one or more input/output channel schemes, such as Single Input Single Output (SISO), Single Input Multiple Output (SIMO), and/or Multiple Input Single Output (MISO) in addition to, or in lieu of, MIMO.

As shown in FIG. 1, input bits for transmission by the OFDM transmitter 100 are passed through a channel encoding block 110, where, among other things, redundant bits are added for error correction, and then the encoded bits passed through a system modulation block 120. These complex baseband symbols may be represented as an OFDM symbol grid, consisting of NT OFDM symbols and NSC subcarriers. In some examples, pilot signals may be inserted in specific OFDM symbols and subcarriers by pilot insertion block 125, while data is inserted in the remaining OFDM symbols and subcarriers. The OFDM symbol grid created by System Modulation block 120 (and, in some examples, the pilot insertion block 125) is converted from the frequency domain into the time domain by an Inverse Fast Fourier Transform (IFFT) block 130 and then transmitted by the OFDM transmitter 100.

The pilot signals are received via Fast Fourier Transform (IFFT) block 153 and extracted from *Y(k)* by a pilot extraction block 155, from which a channel estimation & interpolation block 157 estimates the channel and interpolates the OFDM grid, which is provided with the received signal *Y(k)* in the frequency domain to equalization block 160 which removes detrimental channel impairments and provides the received OFDM grid to a system demodulation block 170, which demodulates the received OFDM grid according to the appropriate modulation scheme and provides the resulting Least Likelihood Ratio (LLR) values to the channel decoding block 180, which uses LLR values to produce the decoded bits.

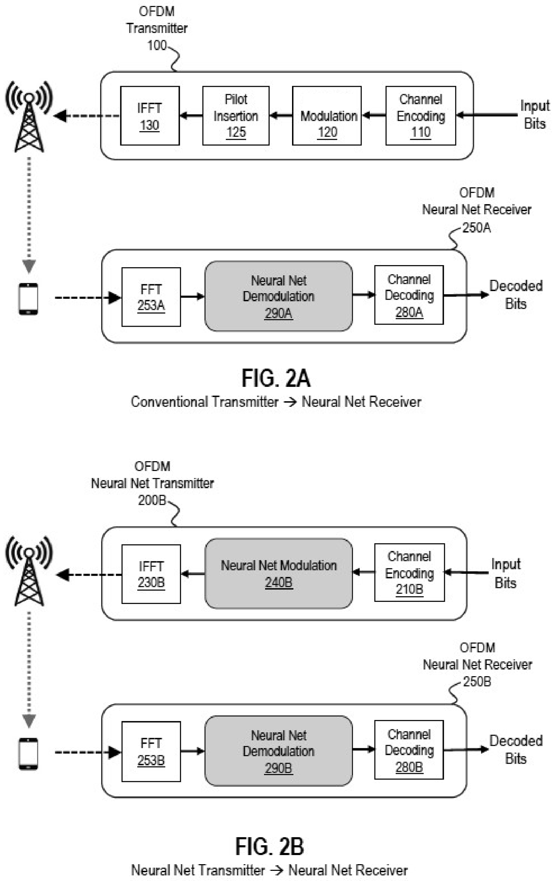

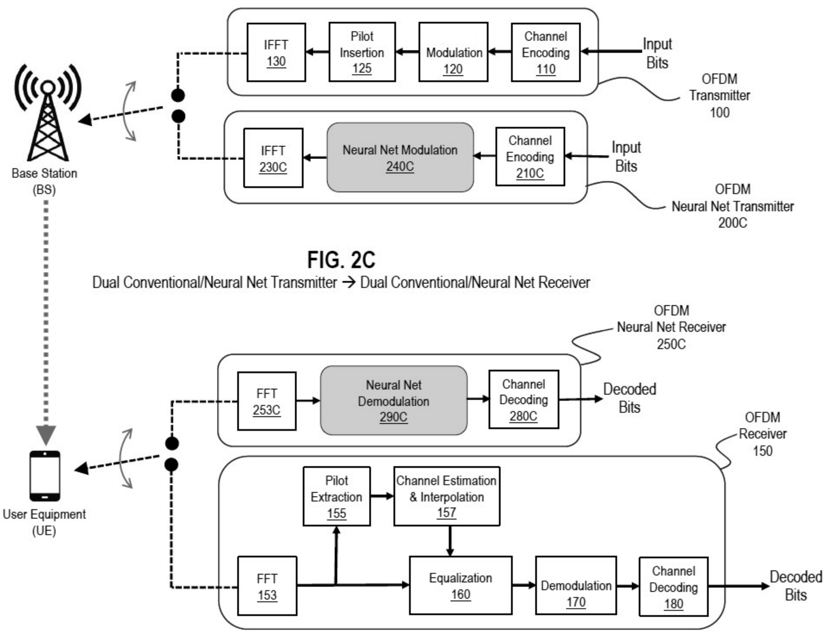

FIGS. 2A-2C are block diagrams illustrating neural net receivers and, in some cases, neural net transmitters in various configurations, according to examples as described herein. FIG. 2A is a block diagram illustrating a conventional OFDM transmitter 100 transmitting to an OFDM neural net receiver 250A. FIG. 2B is a block diagram illustrating an OFDM neural net transmitter 200B transmitting to an OFDM neural net receiver 250B. FIG. 2C is a block diagram illustrating a configuration where both the transmitting side and the receiving side may switch between conventional modulation/demodulation and neural net modulation/demodulation.

FIGS. 2A-2C are provided to illustrate examples of the present disclosure, and may omit aspects, features, and/or components not germane to examples of the present disclosure, as would be understood by one of ordinary skill in the art. As mentioned above, although the present disclosure may often refer to NN receivers/transmitters in the various examples, it should be understood that the present disclosure applies equally to neuromorphic network receivers/ transmitters, as would be understood by one of ordinary skill in the art.

In FIG. 2A, the OFDM transmitter 100 is equivalent to the OFDM transmitter 100 in FIG. 1, but an OFDM neural net receiver 250A replaces the OFDM receiver 150 of FIG. 1. As shown in FIG. 2A, a neural net demodulation system 290A in the OFDM neural net receiver 250A replaces the functionality and operations of the pilot extraction block 155, the channel estimation & interpolation block 157, the equalization block 160, and the system demodulation block 170 of the conventional OFDM receiver 150 in FIG. 1. More specifically, the OFDM neural net receiver 250A receives the OFDM *y(n)* signal in the time domain and a Fast Fourier Transform (FFT) block 253A converts it into the frequency domain complex OFDM signal *Y(k),* which is the input for the neural net demodulation system 290A, which produces LLR values as input to a channel decoding block 280A, which uses the LLR values to produce the decoded bits.

The possible implementations of the neural net demodulation system 290 in FIGS. 2A-2C in accordance with examples of the present disclosure are discussed in detail with reference to the drawings below.

In FIG. 2B, an OFDM neural net transmitter 200B replaces the OFDM transmitter 100 from FIG. 1 and an OFDM neural net receiver 250B replaces the OFDM receiver 150 of FIG. 1. As shown in FIG. 2B, a neural net modulation system 240B in the OFDM neural net transmitter 200B replaces the functionality and operations of the pilot insertion block 125 and the system modulation block 120 of the conventional OFDM transmitter 100 from FIG. 1. In some examples, the OFDM neural net transmitter 200B may not replace the pilot insertion block 125, either because the system is pilotless or because the pilot insertion block 125 remains in place (separate from, and connected to, the neural net modulation system 240B). In such examples, the pilot extraction block 155 or some form thereof may also remain in place on the receiving side (separate from, and connected to, the neural net demodulation system 290B) or may not be needed in a pilotless system.

Returning to FIG. 2B, the OFDM neural net transmitter 200B receives the input bits for transmission, which are passed through a channel encoding block 210B, where, among other things, redundant bits are added for error correction, and then the encoded bits are passed through the neural net modulation system 240B which produces the complex OFDM symbol grid (according to the appropriate modulation scheme), which is then converted from the frequency domain into the time domain by an Inverse Fast Fourier Transform (IFFT) block 230B and transmitted by the OFDM neural net transmitter 200B. Similarly to FIG. 2A, the OFDM neural net receiver 250B receives the OFDM *y(n)* signal in the time domain and a Fast Fourier Transform (FFT) block 253B converts it into the frequency domain complex OFDM signal *Y(k),* which is the input for the neural net demodulation system 290A, which produces LLR values as input to a channel decoding block 280B, which uses the LLR values to produce the decoded bits

Examples according to the present disclosure may transmit and receive OFDM signals with and/or without pilot signals. For example, the conventional OFDM transmitter 100 in FIG. 2A may include the insertion of pilot signals into the OFDM resource grid (by the pilot insertion block 125), but the OFDM neural net receiver 250A replaces the functionality of the pilot extraction block 155 from FIG. 1 with the neural net demodulation system 290A. By contrast, as another example, the transmissions of the OFDM neural net transmitter 200B in FIG. 2B have no pilot signals, i.e., pilotless transmission, which may improve system throughput and efficiency compared to the system in FIG. 2A, where the transmissions have inserted pilot signals.

In FIG. 2C, the transmitting side may switch between the conventional OFDM transmitter 100 and an OFDM neural net transmitter 200C (with channel encoding block 210C, neural net modulation system 240C, and IFFT block 230C), while the receiving side may switch between the conventional OFDM receiver 150 and an OFDM neural net receiver 250C (with FFT block 253C, neural net demodulation system 290C, and channel decoding block 280C).

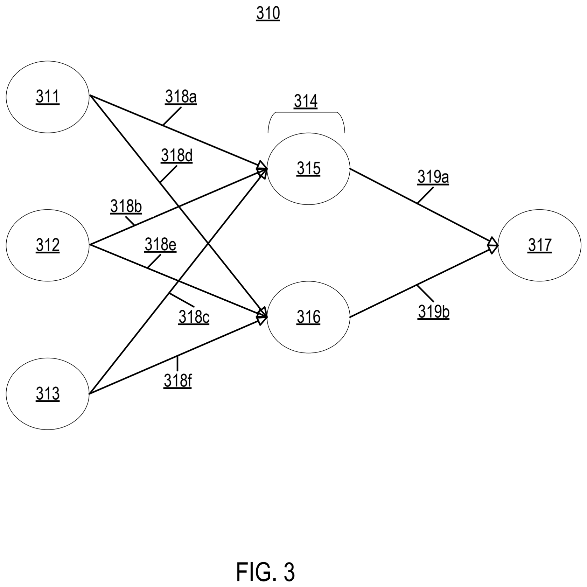

FIG. 3 illustrates a diagram of an implementation structure for a neural net implementing artificial intelligence (AI) and machine learning (ML), according to examples of the present disclosure. In some examples, implementation of NN 310 (hereinafter also referred to as "network 310") may include organizing a structure of the network 310 and "training" the network 310. Although an example of a NN is provided here, it should be appreciated that (as discussed above) other computational methods may be utilized as well.

In some examples, organizing the structure of the network 310 may include network elements including one or more inputs, one or more nodes and an output. In some examples, a structure of the network 310 may be defined to include a plurality of inputs 311, 312, 313, a layer 314 with a plurality of nodes 315, 316, and an output 317.

In addition, in some examples, organizing the structure of the network 310 may include assigning one or more weights associated with the plurality of nodes 315, 316. In some examples, the network 310 may implement a first group of weights 318, including a first weight 318a between the input 311 and the node 315, a second weight 318b between the input 312 and the node 315, a third weight 318c between the input 313 and the node 315. In addition, the network 310 may implement a fourth weight 318d between the input 311 and the node 316, a fifth weight 318e between the input 312 and the node 316, and a sixth weight 318f between the input 313 and the node 16 as well. In addition, a second group of weights 319, including the first weight 319a between the node 315 and the output 317 and the second weight 319b between the node 316 and the output 317 may be implemented as well.

In some examples, "training" the network 310 may include utilization of one or more "training datasets" {(xᵢ, yᵢ)}, where i = 1 ... N for an N number of data pairs. In particular, as will be discussed below, the one or more training datasets {(xᵢ, yᵢ)} may be used to adjust weight values associated with the network 310.

Training of the network 310 may also include, in some examples, may also include implementation of forward propagation and backpropagation. Implementation of forward propagation and backpropagation may include enabling the network 310 to adjust aspects, such as weight values associated with nodes, by looking to past iterations and outputs. In some examples, a forward "sweep" through the network 310 to compute an output for each layer. At this point, in some examples, a difference (i.e., a "loss") between an output of a final layer and a desired output may be "back-propagated" through previous layers by adjusting weight values associated with the nodes in order to minimize a difference between an estimated output from the network 310 (i.e., an "estimated output") and an output the network 310 was meant to produce (i.e., a "ground truth"). In some examples, training of the network 310 may require numerous iterations, as the weights may be continually adjusted to minimize a difference between estimated output and an output the network 310 was meant to produce.

In some examples, once weights for the network 310 may be learned, the network 310 may be used make a prediction or "inference". In some examples, the network 310 may make an inference for a data instance, x*, which may not have been included in the training datasets {(xᵢ, yᵢ)}, to provide an output value y* (i.e., an inference) associated with the data instance x*. Furthermore, in some examples, a prediction loss indicating a predictive quality (i.e., accuracy) of the network 310 may be ascertained by determining a "loss" representing a difference between the estimated output value y* and an associated ground truth value.

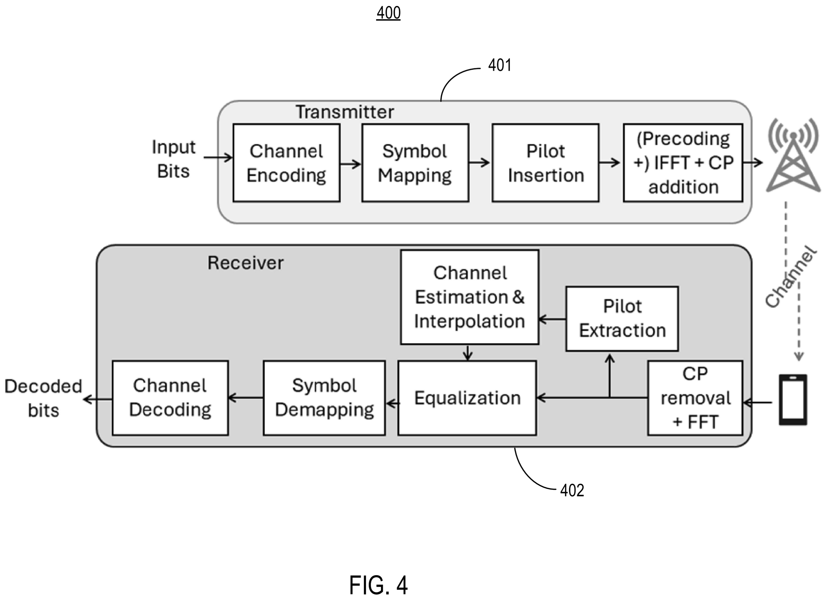

FIG. 4 illustrates a block diagram of signal processing-based telecommunications system 400, according to examples of the present disclosure. More specifically, in some examples, the telecommunications system 400 may be a signal processing-based transceiver architecture configured to transmit using OFDM. In some examples, the telecommunications system 400 may include a transmitter 401 and a receiver 402. As illustrated in FIG. 4 and discussed further below, the transmitter 401 and the receiver 402 may include one or more signal processing blocks directed to various signal processing functionalities.

In some examples, during transmission from transmitter 401 (i.e., or "transmitter-side"), input bits may be passed through a channel encoder to add redundant bits (for error correction). The encoded bits may (then) be passed through a symbol mapping/modulation processing block to convert the encoded bits to complex baseband symbols. The complex baseband symbols may be used to form an OFDM symbol grid that may consist of, for example, *N* OFDM symbols and *N*_{sc} subcarriers (SC). Furthermore, pilots may be inserted in specific OFDM symbols and subcarriers, and data may be inserted in remaining symbols and subcarriers. Additionally, signal(s) may be converted from frequency domain to time domain by an inverse fast Fourier transform (IFFT) operation, and a cyclic prefix (CP) may be appended to obtain an OFDM symbol. Finally, one or more OFDM symbols may be fed to the antennas to be transmitted over the air.

During receipt by receiver 402 (i.e., or "receiver-side"), the CP may be removed from the (received) signal(s), which may then be passed through a fast Fourier transform (FFT) block. In some instances, the obtained frequency domain signal (e.g., in a Single Input Single Output (SISO), Single Input Multiple output (SIMO), and Multiple Input Single Output (MISO) system) may be computed as: ${y}_{mn} = {h}_{mn} {x}_{mn} + {n}_{mn}$ where *xₘₙ* may denote the transmitted symbol, *yₘₙ* may denote the signal at receiver, and *nₘₙ* may denote the additive white Gaussian noise (AWGN) with variance *N*₀, for *m* ∈ {0, ... , *M* - 1} and *n* ∈ {0, ... , *N* - 1} representing the OFDM symbol and subcarrier index, respectively. For SISO systems, ${h}_{mn} ∈ ℂ$ may indicate a channel between the transmitter and receiver. For MISO systems, ${h}_{mn} ∈ ℂ$ may indicate a (effective) channel between the transmitter and receiver, which may, in some examples, be obtained through multiplication of precoding and channel vectors.

Next, in some examples, the receiver may perform channel estimation (e.g., via implementation of a least squares (LS) method) over the pilot symbols ${p}_{ij} ∈ ℂ$*,* for OFDM symbol *i* ∈ {0, ... , *M* - 1} and subcarrier *j* ∈ {0, ... , *N -* 1}. Based on the equation (1) provided above, the channel estimate obtained by LS algorithm, ${\hat{h}}_{ij} ∈ ℂ$*,* and its error variance, ${σ}_{ij}^{2} ∈ ℝ$, may be computed as: ${\hat{h}}_{ij} = \frac{{y}_{ij} {p}_{ij}^{∗}}{{\left|{p}_{ij}\right|}^{2}} = {h}_{ij} + {{h}^{˜}}_{ij} ,$ ${σ}_{in}^{2} = E \left[{{h}^{˜}}_{ij}{{h}^{˜}}_{ij}^{∗}\right] = \frac{{N}_{0}}{{\left|{p}_{ij}\right|}^{2}} ,$ where ${{h}^{˜}}_{ij} ∈ ℂ$ may denote an estimation error and (·)* may be a conjugate operation.

Following channel estimation at pilot locations, a predetermined interpolation may be performed to interpolate the channel estimates and the error variances in the remaining OFDM symbols and subcarriers. In some examples, the interpolation may be performed over time and/or frequency across pilot subcarriers. For example, in some instances, a piecewise constant interpolation method may be implemented, wherein a channel may remain constant between two pilot locations.

So, in some instances, OFDM symbol indexes *k*₁ and *k*₂ may be defined as two OFDM symbol indices carrying pilot symbols, and *Q_{P} = k*₂ *- k*₁*,* then channel estimates for all the other OFDM symbols, ${\hat{h}}_{mn} ∈ ℂ$, can be obtained via linear interpolation as: ${\hat{h}}_{mn} = {μ}_{m} {\hat{h}}_{{k}_{1} n} + \left(1-{μ}_{m}\right) {\hat{h}}_{{k}_{2} n} ,$ where *µₘ* (interpolation coefficient for symbol *m*) = *m*/*Q_{P}.*

Next, the interpolated channel estimates (i.e., obtained by equation (4)) may be used to perform equalization on data symbols ${y}_{m ′ n} ∈ ℂ$ (where *m*' ∈ *m* ≠ *i*) to determine estimated data symbols ${\hat{x}}_{m ′ n} ∈ ℂ$*.* An example equalization method may be Linear Minimum Mean Square Estimation (LMMSE) equalization, for which *x̂_{m'n}*, may be computed as follows: ${\hat{x}}_{m ′ n} = {\left(\left({\hat{h}}_{m ′ n}\right)*{\hat{h}}_{m ′ n}+{σ}_{m ′}^{2}\right)}^{- 1} \left({\hat{h}}_{m ′ n}\right) * {y}_{m ′ n} .$

The equalized symbols in (5) may be passed through a symbol de-mapper that may output "soft" probabilistic outputs or log-likelihood ratios (LLRs). In some examples, the Long-Likelihood Ratio (LLR) may be derived for the *l^{th} =* 0, ..., *B* - 1 bit of a symbol, where *B* may denote a total number of bits per symbol, as [2] ${LLR}_{m ′ n}^{l} = ln \left(\frac{Pr \left(\left.{b}^{l}=1\right|{\hat{x}}_{m ′ n}^{l}\right)}{Pr \left(\left.{b}^{l}=0\right|{\hat{x}}_{m ′ n}^{l}\right)}\right) \approx ln \left(\frac{{\sum }_{c ∈ {C}_{l , 1}} exp \left(-{\left|{\hat{x}}_{m ′ n}^{l}-c\right|}^{2}/{σ}_{m ′}^{2}\right)}{{\sum }_{c ∈ {C}_{l , 0}} exp \left(-{\left|{\hat{x}}_{m ′ n}^{l}-c\right|}^{2}/{σ}_{m ′}^{2}\right)}\right)$ where, $Pr \left(\left.{b}^{l}=1\right|{\hat{x}}_{m ′ n}^{l}\right)$ is the conditional probability that for a given symbol ${\hat{x}}_{m ′ n}^{l}$*,* the transmitted bit is 1, i.e., *b^{l}* = 1, 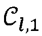 may denote a constellation point where the *l^{th}* bit may be equal to 1. Finally, the computed LLR values may be passed to a channel decoder to obtain decoded bits.

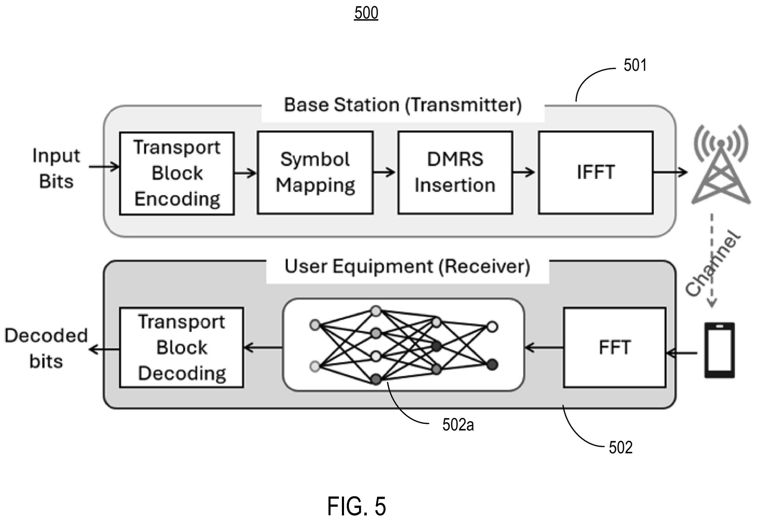

FIGS. 5-6 illustrate block diagrams of NN-based transceivers, according to examples as described herein. In FIGS. 5-6, NN-based transceivers may replace signal processing blocks that may be found in conventional transceiver systems.

In particular, FIG. 5 illustrates a block diagram of signal processing-based telecommunications system 500 having a NN-based transceiver architecture. In some examples, telecommunication system 500 may operate using OFDM, and utilize pilot data. In some examples, the telecommunications system 500 may include a base station/transmitter 501 and a user equipment/receiver 502. FIG. 5 also illustrates a NN 502a implemented to replace several blocks at receiver-side. In some examples, the NN 502a may take a frequency domain complex baseband OFDM signal as input and may produce LLR(s) as outputs.

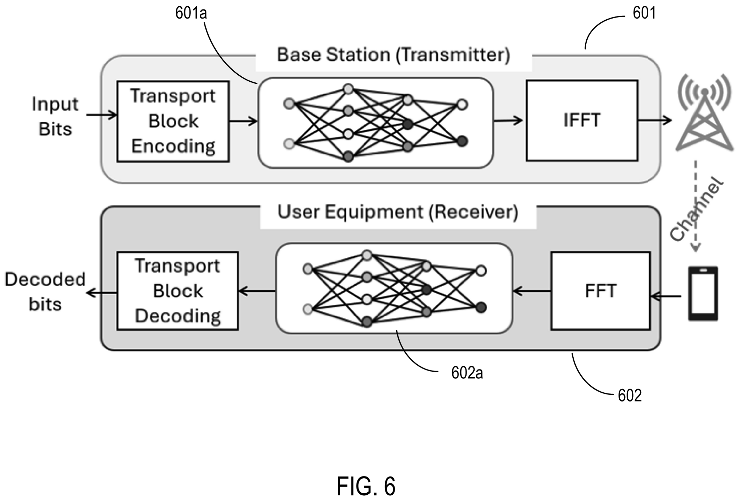

FIG. 6 illustrates a block diagram of signal processing-based telecommunications system 600 having a NN-based transceiver architecture using OFDM, and without utilizing pilot data. In some examples, the telecommunications system 600 may include a base station/transmitter 601 and a user equipment/receiver 602. In some examples, the transmitter 601 may include a NN 601a that may be implemented to replace one or more processing blocks (e.g., a modulation/symbol mapping block) at transmitter-side. In some examples, the receiver 602 may also include a NN 602a that may replace one or more processing blocks at the receiver 602. Examples of these processing blocks include pilot extraction, channel estimation (CE) and interpolation, channel equalization (CEQ), and signal de-mapping (SD).

In some examples, NN receivers as illustrated in FIGS. 5-6 may of different types. A first type may be a NN receiver that may enable insertion of pilot data (e.g., OFDM symbols in a resource grid). A second type may be a NN receivers that may facilitate a pilotless transmitter via replacement of a symbol modulation block with a NN, along with removal of a pilot (data) insertion block. In some instances, since an OFDM resource grid may not include pilots, throughput may be improved when compared to the abovementioned scenario including piloting.

Furthermore, in some examples, training of the NN receivers as illustrated in FIGS. 5-6 may be particular to whether they may be piloted or pilotless. For a NN that may be piloted, the training may only be performed at receiver-side. This may be achieved, for example, by maximizing a bit-metric decoding rate (as opposed to minimizing binary cross entropy (BCE) loss).

For a NN that may be pilotless, end-to-end training may be performed at transmitter and receiver side. In some examples, the end-to-end training may be performed by minimizing BCE loss. In other examples, the end-to-end training may be performed by implementing a two-step training approach, wherein a transmitter side block may be trained and a bit-metric decoding rate may be maximized.

### Obtaining a UE to perform as a NN receiver

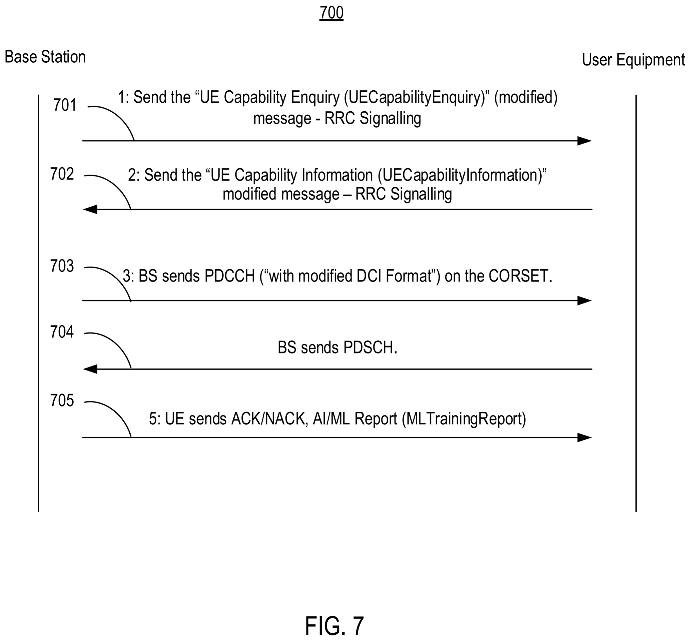

FIG. 7 illustrates an example a call flow 700 of providing UE capability in Al-based NN receivers, according to examples of the present disclosure. It may be appreciated that, in some instances, to provide UE capability and switch between multiple trained models, life cycle management (LCM) functionalities and model identifier (ID) determination may be implemented.

At 701, a base station (BS) may send a radio resource control (RRC) message to UE including a capability enquiry message (i.e., a UECapabilityEnquiry message) to request UE capabilities.

At 702, UE may send the RRC message to a BS (i.e., a capability information message or UECapabilityInformation message) to receive UE capabilities. In some examples, the capability enquiry message and capability information message may be modified to include two variables to indicate support of the NN receivers for Physical Downlink Shared Channel (PDSCH) and Physical Uplink Shared Channel (PUSCH) transmission types. Also, in some examples, both messages may be ENUMERATED {supported}, and may be optional. As used herein, an "enumerated" type may be a (message) type that may be represented with finite values. In some examples, an enumeration item may be encoded as its corresponding numeric value, and a value may be encoded using a minimum number of bits necessary to represent all the values in a value set. In other examples, a variable may be added to report pilotless capability. In some examples, it may be a two-bit string and may be optional.

At 703, a BS may send a Physical Downlink Control Channel (PDCCH) to a UE. In some examples, the PDCCH may have downlink control information (DCI). Also, in some examples, additional information in the DCI format may be included. Specifically, in some examples, a demodulation reference signal (DMRS) configuration may be modified to include pilotless transmission by defining a (new) DMRS Type (i.e., no DMRS). In some examples, a format of the DCI used for scheduling PDSCH may be modified. In some examples, an antenna port and number of layers may be modified to include a DMRS signal to indicate a pilotless transmission.

At 704, a BS may send a PDSCH transmission. In some examples, UE may perform decoding of the PDSCH using the NN receiver (if enabled), and in some examples, may be pilotless (if enabled).

At 705, UE may send an acknowledgement (ACK) or negative acknowledgement (NACK) on the PUSCH or physical uplink control channel (PUCCH). Also, in some examples, the UE may send a ML report indicating performance of the NN receivers.

In addition, in some examples, system and methods described herein may obtain a model identifier (ID) to perform model switching. In some examples, selection of the model ID may be done at UE-side, while in other examples it may be done on network-side.

Also, a decision or trigger to implement model switching may take place based on one or more criteria. Example criteria include, but are not limited to, after a certain time period, after a certain number of transmissions are received, and/or after certain number of packet decoding errors occur.

In some examples, a system (e.g., deployed at receiver-side) may implement a plurality of NN-based receivers trained to operate in different environments. Additionally, in some examples, a switching module may be implemented to choose one of these NN-based receivers to enable maximizing of a probability of a successful decoding of an input signal.

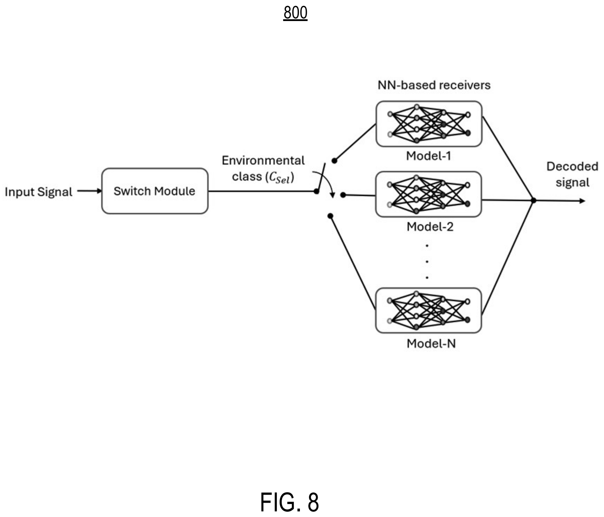

FIG. 8 illustrates a model switching framework 800 for selection among a plurality of NN-based receivers, according to examples of the present disclosure. As illustrated in FIG. 8, in some examples, a NN-based module (or "switch module") 801 may be implemented to select a NN-based receiver from a plurality of NN-based receivers that may be trained to operate in different environments.

In particular, the switching module may be implemented to predict an environment and to choose a corresponding NN-based receiver. As used herein, an "environment" may include any setting, situation, or aspect thereof in which a receiver (or transmitter) may operate. Examples of such environments may include, but are not limited to, an office environment, a factory environment, a home environment, an outdoor environment, a rural environment, an outdoor environment, an urban environment, stationary environment, mobile environment, etc. In some examples, a plurality of NN-based receivers may be trained for one or more such environments. Also, in some examples, one or more NN-based receivers may be used to perform a particular decoding.

### Obtaining a model ID to perform model switching

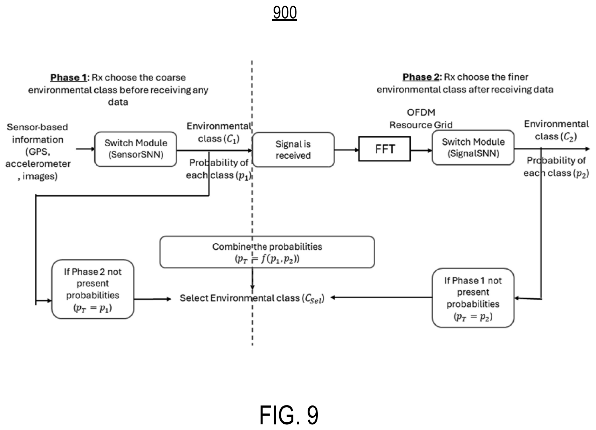

FIG. 9 illustrates a multi-phase implementation 900 for environmental class selection and model switching, according to examples of the present disclosure. In some examples, a switching module may be a NN-based module configured to predict a receiver's environment among a set of predetermined environment types. In addition, in some examples, a model identifier (ID) may be determined (e.g., at UE side) and/or processing related to a switching module is performed (e.g., at UE side), where the NN receiver may reside.

In some examples, determining a model ID may include determining of environmental information in one or more phases, wherein each phase may provide a probability for an environmental class. In some examples, and as discussed further below, multiple probabilities may then be combined to obtain the environmental class.

In some examples, the combined probability *p_{T}* ∈ [0,1] may be obtained as follows: *p_{T} = f*(*p*₁*, p*₂).

The function *f* may be any function with output in the range [0,1], such as, $f \left({p}_{1}, {p}_{2}\right) = {p}_{1} . {p}_{2}$ or $f \left({p}_{1}, {p}_{2}\right) = \frac{{αp}_{1} + {βp}_{2}}{α + β} .$

### NN switching modules

Systems and methods described herein may implement multiple types of **NN** switching modules based on inputs that may be provided and/or available. For example, a first **NN** switching module may be a sensor-based switching **NN** (e.g., "SensorSNN"), and a second **NN** switch module may be a signal-based switching **NN** (e.g., "SignalSNN").

### Sensor-based Switching NN (SensorSNN)

In some examples, a sensor-based switching NN (or "sensor-based switching module") may be implemented. In some examples, the implementation of the sensor-based switching module may be part of a first phase that may be implemented to select one or more predetermined environment types and/or (associated) NN-based receivers. In some examples, a first phase may include a NN receiver choosing a first (i.e., "coarse") environmental class prior to receiving any data.

In some examples, inputs for a sensor-based switching module may include, among other things, information received from sensors (e.g., located at receiver-end) and/or location data (e.g., location data received from a transmitter). Examples of sensor information received include audio samples (e.g., from microphones), image samples (e.g., from cameras), or measurements from various measurements devices (e.g., accelerometers, gyroscopes, magnetometers, etc.). In some examples, the sensor-based switching module may be employed prior to performing any signal processing operations on a received signal.

In some examples, a sensor-based switching module may utilize (attendant) environmental information to select a NN-based on external factors. More specifically, in some examples, the sensor-based switching module may select a NN based (e.g., solely) on data collected from sensors at UE side. In some examples, this information may be referred to as "coarse" environmental information.

In some examples, environmental information and velocity of a user may be determined via deterministic algorithms, while in other examples, the environmental information may be determined via an NN module. For example, in some instances, location information (e.g., GPS coordinates) may be determined, which may then be used to determine a velocity of the user. Furthermore, in some examples, measurement data from accelerometers and/or gyroscopes may be utilized to identify a type of movement for a user (e.g., walking, standing, running, etc.).

In addition, image samples (e.g., from cameras) may be utilized to obtain the environmental information. Specifically, image samples may be provided to image segmentation NN algorithms to classify objects in an image.

In some examples, this information (e.g., GPS coordinates, satellite image, velocity of user, movement type, classified objects, etc.) may be provided to a convolutional NN (CNN) as input to generate a probability (p₁) associated with one or more environmental classes (C₁), and utilize the generated probabilities to predict a ("coarse") environmental class (having probability p_{T}). That is, in some examples, an output the NN switching module may be one or more predetermined environment types and/or (associated) NN-based receivers. As discussed above, this output(s) may be utilized to switch to a particular (i.e., optimal and/or appropriate) NN-based receiver.

### Signal-based Switching NN (SignalSNN)

In some examples, a signal-based switching NN (or "signal-based switching module") may be implemented. In some examples, implementation of the signal-based switching module may be part of a second phase that may be implemented to select one or more predetermined environment types and/or (associated) NN-based receivers. In some examples, a first phase may include a NN receiver choosing a second (i.e., "finer") environmental class after receiving any data. In some examples, input(s) may include a received signal, such as a frequency domain complex baseband OFDM signal.

In some examples, an FFT operation may be implemented on a (received) signal at receiver-side, and may be provided to the signal-based switching module. It may be appreciated that since the signal-based switching module is utilizing a signal in operation (i.e., associated with an existing channel, hardware, etc.), environmental information associated with the signal that may be more accurate and/or detailed.

In some examples, a signal-based switching module may be implemented based on a type of information found in the input signal. For example, in some instances, a received signal may be implemented as input, wherein the signal-based switching module (e.g., receiver-side) may be deployed without integrated sensing and communication (ISAC) capability. So, in these examples, the OFDM resource grid of the actual data signal may be utilized.

In other instances, a reflected signal may be utilized as input. For example, in instances where a receiver may have ISAC capability, a UE may calculate a reflected signal from a received signal (e.g., via a signal processing algorithm) and may utilize information associated with the reflected signal as input for the signal-based switching module.

It may be appreciated that a signal-based switching module implemented herein may implement one or more NN types. So, in some examples, the switching module may be a convolutional neural network (CNN). In particular, in some examples, the CNN may employ input dimensions equal to an OFDM resource grid, and output dimensions may be equal to a number of predetermined environmental types. In some examples, architecture of the network may include several CNN layers and dense layers (e.g., similar architecture to that employed in computer vision applications). In some examples, an output dimension of signal-based switching module may be equal to a number of predetermined environment types and/or trained NN-based receivers. In some examples, these outputs may be used to switch to a desired NN-based receiver.

### Determining Model ID at Network Side

In some examples, a Model ID may also be determined at network side. That is, in some examples, a switching module may be made available at a centralized server or base station, wherein the base station may determine environmental information associated with users (e.g., UEs, mobile devices, etc. where the NN-based receivers may be employed at), and may provide this information to the users (e.g., via a signaling method). In some examples, a base station may determine information about its environment (e.g., urban setting, suburban setting, rural setting, etc.) that may be useful for performing switching of NNs (e.g., as described above) that may trained for various environments (e.g., urban macro-cellular (Uma), urban micro-cellular (Umi), rural macro-cell (RMa), etc.) directly and without any processing.

In addition, in some examples, a base station may determine various information (e.g., UE location, UE velocity, etc.) which may remove a need of using corresponding sensors implemented at UE side. Furthermore, in some examples, if a base station may have ISAC capabilities, the base station may calculate a reflected signal from the received signal (e.g., via a signal processing algorithm) utilizing information associated with the transmitted signal. Utilizing the information associated with the reflected signal, the base station may determine (e.g., via signal processing periodogram-based methods) various information associated with the targets/users in the environment (e.g., velocity, distance, angle, etc.). In other examples, information associated with the reflected signal may be provided to a NN model as input. In some examples, the base station may determine an environment for the UE, and may send the model switching signal to the UE when a switch is to take place.

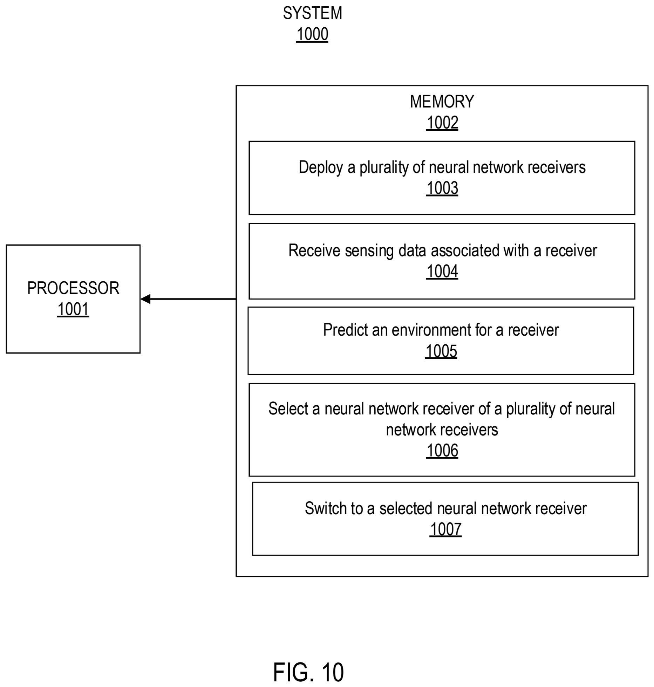

Reference is now made to FIG. 10. FIG. 10 illustrates a block diagram of a system environment, including a system, that may be implemented to use artificial intelligence (AI) and machine learning (ML)-based switching techniques for neural network (NN)-based receivers in telecommunications systems, according to examples of the present disclosure.

As shown in FIG. 10, the system 1000 may include processor 1001 and the memory 1002. In some examples, the processor 1001 may be configured to execute the machine-readable instructions stored in the memory 1002. It should be appreciated that the processor 1001 may be a semiconductor-based microprocessor, a central processing unit (CPU), an application specific integrated circuit (ASIC), a field-programmable gate array (FPGA), and/or other suitable hardware device.

In some examples, the memory 1002 may have stored thereon machine-readable instructions (which may also be termed computer-readable instructions) that the processor 1001 may execute. The memory 1002 may be an electronic, magnetic, optical, or other physical storage device that contains or stores executable instructions. The memory 1002 may be, for example, random access memory (RAM), an Electrically Erasable Programmable Read-Only Memory (EEPROM), a storage device, an optical disc, or the like. The memory 1002, which may also be referred to as a computer-readable storage medium, may be a non-transitory machine-readable storage medium, where the term "non-transitory" does not encompass transitory propagating signals.

In some examples, the instructions 1003-1007 may implement artificial intelligence (AI) and machine learning (ML)-based model switching techniques for neural network (NN)-based receivers. In some examples, the instructions 1003 may deploy (i.e., make available or provide) a plurality of neural network receivers associated with a receiver component and trained to operate in different (e.g., receiver-side) environments. In some examples, the instructions 1003 may access the plurality of neural network receivers, and may train each of the neural network receivers based on data associated with the different environments. In particular, for example, each of the plurality of neural network receivers may be trained based on a corresponding environment amongst the (plurality of) different environments. As discussed further below, these (trained) neural network receivers may be accessed during a switching operation for selection of a neural network (e.g., most likely to produce a successful decoding).

In some examples, the instructions 1004 may receive sensing data associated with the receiver. In some examples, the sensing data includes data from one or more receiver-side sensors and location data associated with the receiver, and data from one or more receiver-side sensors includes audio samples, image samples, accelerometer data, and gyroscope data. In some examples, the sensing data further includes data associated with a received signal, and wherein the received signal is a frequency domain complex baseband OFDM signal.

In some examples, the instructions 1005 may predict, based on the received sensing data, an environment for the receiver from a predetermined set of different environment types. In some examples, determining the environment includes implementing a convolutional neural network (CNN) with input dimensions equal to an OFDM resource grid and output dimensions equal to a number of predetermined environmental types.

In some examples, the instruction 1006 may select a neural network receiver of the plurality of neural network receivers based on a probability of a successful decoding, wherein the selected neural network receiver is trained for the environment that the receiver is in. In some examples, the selected neural network receiver is configured to perform channel estimation and interpolation, channel equalization, and signal de-mapping functionalities associated with the communication system. In some examples, the selecting the neural network receiver and the obtaining the model ID takes on UE/receiver side, and the selecting the neural network receiver and the obtaining the model ID takes on network/base station side

In some examples, the instructions 1007 may switch to the selected neural network receiver. In some examples, the switching to the selected neural network receiver is based on a switching criteria, the switching criteria including one or more of after a predetermined time period, after a predetermined number of transmissions are received, and after a predetermined number of packet decoding errors occur.

Additionally, and as described above, although not depicted, instructions 1003-1007 may be configured to utilize various artificial intelligence (AI) and machine learning (ML) based tools. For instance, these artificial intelligence (AI) and machine learning (ML) based tools may be used to generate models that may include a NN (e.g., a recurrent neural network (RNN)), generative adversarial network (GAN), a tree-based model, a Bayesian network, a support vector, clustering, a kernel method, a spline, a knowledge graph, or an ensemble of one or more of these and other techniques. It should also be appreciated that the system 1000 may provide other types of machine learning (ML) approaches as well, such as reinforcement learning, feature learning, anomaly detection, etc.

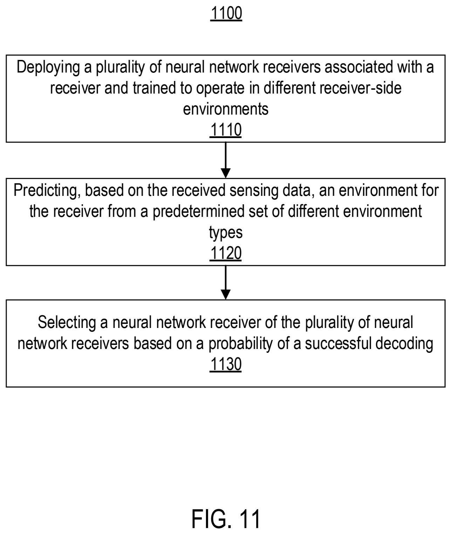

FIG. 11 illustrates a method for utilizing artificial intelligence (AI) and machine learning (ML)-based switching techniques for neural network (NN)-based receivers, according to examples of the present disclosure. The method 1100 is provided by way of example, as there may be a variety of ways to carry out the method described herein. Each block shown in FIG. 11 may further represent one or more processes, methods, or subroutines, and one or more of the blocks may include machine-readable instructions stored on a non-transitory computer-readable medium and executed by a processor or other type of processing circuit to perform one or more operations described herein.

Although the method 1100 is primarily described as being performed by system 1000 as shown in FIG. 10, the method 1100 may be executed or otherwise performed by other systems, or a combination of systems. It should be appreciated that, in some examples, the method 1100 may be configured to incorporate artificial intelligence (AI) or deep learning techniques, as described above.

Reference is now made with respect to FIG. 11. At 1110, a plurality of neural network receivers associated with a receiver may be deployed and trained to operate in different receiver-side environments.

At 1120, an environment for a receiver may be predicted based on the received sensing data and from a predetermined set of different environment types.

At 1130, a neural network receiver of a plurality of neural network receivers may be selected based on a probability of a successful decoding.

While examples described herein are directed to configurations as shown, it should be appreciated that any of the components described or mentioned herein may be altered, changed, replaced, or modified, in size, shape, and numbers, or material, depending on application or use case, and adjusted for desired resolution or optimal measurement results. Moreover, single components may be provided as multiple components, and vice versa, to perform the functions and features described herein. It should be appreciated that the components of the system described herein may operate in partial or full capacity, or it may be removed entirely. It should also be appreciated that analytics and processing techniques described herein with respect to the optical measurements, for example, may also be performed partially or in full by other various components of the overall system.

It should be appreciated that data stores may also be provided to the apparatuses, systems, and methods described herein, and may include volatile and/or nonvolatile data storage that may store data and software or firmware including machine-readable instructions. The software or firmware may include subroutines or applications that perform the functions of the measurement system and/or run one or more applications that utilize data from the measurement or other communicatively coupled system.

The various components, circuits, elements, components, and interfaces may be any number of mechanical, electrical, hardware, network, or software components, circuits, elements, and interfaces that serves to facilitate communication, exchange, and analysis data between any number of or combination of equipment, protocol layers, or applications. For example, the components described herein may each include a network or communication interface to communicate with other servers, devices, components or network elements via a network or other communication protocol.

What has been described and illustrated herein are examples of the disclosure along with some variations. The terms, descriptions, and figures used herein are set forth by way of illustration only and are not meant as limitations. Many variations are possible within the scope of the disclosure, which is intended to be defined by the following claims-and their equivalents-in which all terms are meant in their broadest reasonable sense unless otherwise indicated.

## Claims

1. A method to select a neural network receiver for a communications network, comprising:
deploying a plurality of neural network receivers associated with a receiver component of the communications network, wherein the plurality of neural network receivers are trained to operate in different environments;
receiving sensing data associated with the receiver component;
predicting, based on the received sensing data, an environment for the receiver component from a predetermined set of different environment types;
selecting the neural network receiver from the plurality of neural network receivers based on a probability of a successful decoding, wherein the selected neural network receiver is trained for the predicted environment; and
switching to the selected neural network receiver to perform one or more operations of the receiver component.

2. The method of claim 1, wherein the one or more operations include channel estimation and interpolation, channel equalization, and signal de-mapping functionalities associated with the communications network.

3. The method of claim 1 or claim 2, further comprising obtaining a model identifier, ID, for the selected neural network receiver.

4. The method of any preceding claim, wherein the switching to the selected neural network receiver is based on a switching criteria, the switching criteria including one or more of after a predetermined time period, after a predetermined number of transmissions are received, and after a predetermined number of packet decoding errors occur.

5. The method of any preceding claim, wherein the received sensing data includes data from one or more receiver-side sensors and location data associated with the receiver component, and
optionally wherein:
the data from one or more receiver-side sensors includes at least one of audio samples, image samples, accelerometer data, and gyroscope data.

6. The method of claim 5, wherein the received sensing data further includes data associated with a signal received by the receiver component, and optionally wherein the signal received by the receiver component is a frequency domain complex baseband OFDM signal.

7. A system, comprising:
at least one processor with a non-transitory computer-readable memory storing instructions executable by the at least one processor to:
deploy a plurality of neural network receivers associated with a receiver component of a communications network, wherein the plurality of neural network receivers are trained to operate in different environments;
receive sensing data associated with the receiver component;
predict, based on the received sensing data, an environment for the receiver component from a predetermined set of different environment types;
select a neural network receiver from the plurality of neural network receivers based on a probability of a successful decoding, wherein the selected neural network receiver is trained for the predicted environment; and
switch to the selected neural network receiver to perform one or more operations of the receiver component.

8. The system of claim 7, wherein the one or more operations include channel estimation and interpolation, channel equalization, and signal de-mapping functionalities associated with the communications network.

9. The system of claim 7 or claim 8, wherein the switching to the selected neural network receiver is based on a switching criteria, the switching criteria including one or more of after a predetermined time period, after a predetermined number of transmissions are received, and after a predetermined number of packet decoding errors occur.

10. The system of any of claims 7 to 9, wherein:
the receiver component is deployed on user equipment, UE, side, or
the receiver component is deployed on network side.

11. The system of any of claims 7 to 10, wherein the predicting the environment for the receiver component includes implementing a convolutional neural network, CNN, and optionally wherein input dimensions of the CNN are equal to an OFDM resource grid, and output dimensions of the CNN are equal to a number of predetermined environmental types.

12. A method to select a neural network receiver for a communications network, comprising:
deploying a plurality of neural network receivers associated with a receiver component of the communications network, wherein the plurality of neural network receivers are trained to operate in different environments;
predicting, based on received sensing data, an environment for the receiver component from a predetermined set of different environment types, wherein the received sensing data includes data associated with a signal received by the receiver component; and
selecting the neural network receiver from the plurality of neural network receivers based on a probability of a successful decoding, wherein the selected neural network receiver is trained for the predicted environment.

13. The method of claim 12, further comprising switching to the selected neural network receiver to perform one or more operations of the receiver component, wherein the one or more operations include channel estimation and interpolation, channel equalization, and signal de-mapping functionalities associated with the communications network.

14. The method of claim 12 or claim 13, further comprising obtaining a model identifier, ID, for the selected neural network receiver.

15. The method of any of claims 12 to 14, further comprising:
calculating a reflected signal based on the signal received by the receiver component; and
utilizing the reflected signal to determine the environment for the receiver component,
and/or
wherein the predicting the environment for the receiver component includes implementing a convolutional neural network, CNN, with input dimensions equal to an OFDM resource grid and output dimensions equal to a number of predetermined environmental types.
